# EUROPÄISCHE PATENTSCHRIFT

(11) **EP 0 835 208 B1**
(45) Veröffentlichungstag und Bekanntmachung des Hinweises auf die Patenterteilung: **01.03.2000**
(21) Anmeldenummer: 96923910.2
(22) Anmeldetag: 24.06.1996
(51) Int. Cl.: C09J 123/02, C09J 167/02, B65C 3/16

(54) **VERFAHREN ZUM VERKLEBEN VON RUNDUMETIKETTEN**
METHOD FOR STICKING ALL-ROUND LABELS
METHODE POUR COLLER DES ETIQUETTES AUTOUR D'UN SUPPORT

(30) Priorität: 26.06.1995 DE 19522568; 06.05.1996 DE 19617962; 09.05.1996 DE 19618549
(43) Veröffentlichungstag der Anmeldung: 15.04.1998
(73) Patentinhaber: Henkel Kommanditgesellschaft auf Aktien, 40589 Düsseldorf-Holthausen (DE)
(72) Erfinder: HEEMANN, Marcus, D-40225 Düsseldorf (DE); PÜRKNER, Eckhard, D-40595 Düsseldorf (DE); KLINGBERG, Wolfgang, D-41352 Korschenbroich (DE); HERLFTERKAMP, Bernhard, D-46236 Bottrop (DE); ONUSSEIT, Hermann, D-42781 Haan (DE); GOSSEN, Ralf, D-47239 Duisburg (DE)
(86) Internationale Anmeldenummer: EP9602753
(87) Internationale Veröffentlichungsnummer: WO9701483

(56) Entgegenhaltungen:
- EP-A- 0 143 621
- EP-A- 0 219 267
- EP-A- 0 531 618
- WO-A-92/03515
- DE-A- 3 637 465

## Beschreibung

Die vorliegende Erfindung betrifft ein Verfahren zur Herstellung einer wieder leicht lösbaren Verbindung von Rundumetiketten mit Hohlkörpern.

Zum Etikettieren von Hohlkörpern wie beispielsweise Glas- und Polyethylenterephthalatflaschen werden zur Zeit hauptsächlich Leime auf Basis von Casein eingesetzt. Diese wäßrigen Formulierungen basieren hauptsächlich auf einer Caseinkomponente und einem Tackifierharz neben bestimmten Zusatzadditiven. In diesem Zusammenhang ist beispielsweise die WO 93/03110 zu nennen, die einen Klebstoff auf Basis von Casein, wasserlöslichen Streckmitteln, Füllstoffen und gegebenenfalls weiteren Zusatzstoffen beschreibt, wobei der Klebstoff charakteristischerweise Harzsäurederivate und Alkohol enthält. Dadurch wird eine einwandfreie Etikettierung von feuchten Glasflaschen auch bei 15 °C ermöglicht, selbst wenn der Caseingehalt deutlich unter den üblichen Konzentrationen von mehr als 18 Gew.-% liegt.

Die vorgenannten Etikettierklebstoffe mit einer Caseinkomponente haben allerdings den Nachteil, daß die Ablösung der Etiketten bei der Reinigung sehr aufwendig ist. So wird in der europäischen Patentanmeldung 503 112 in Spalte 1, Zeile 36 bis Spalte 2, Spalte 52, unter anderem ausgeführt: "Bisher erfolgt das Abwaschen der Etiketten mittels erhitzter Waschlauge bei einem hohen Wasserdurchsatz. Entsprechend aufwendig ist die Handhabung der Schmutzfracht des Abwassers, wobei es nicht nur um die erforderliche zellulosefaserfreie Filtration dieser Abwässer geht, sondern insbesondere auch um die Beseitigung von Metallkomponenten, insbesondere Aluminiumverbindungen aus dem Abwasser, die im erhöhten Maße durch den Aufdruck, also die Farbkomponenten der Etiketten vorhanden sind. Die Etiketten werden in der Flaschenreinigungsmaschine in einer ca. 2,5-%igen Natriumhydroxidlösung bei einer Temperatur von durchschnittlich 82 °C abgelöst. Bei diesem Ablösevorgang gehen selbstverständlich Papierstrichanteile und damit auch Farbe und Lackanteile von der Bedruckung in die Lauge über. Etiketten belasten somit die Lauge mit Schmutzfrachten, die heute nach dem chemischen Sauerstoffbedarf (CSB) gewertet werden. Die Brauereien wiederum müssen ihre Abwasserabgaben nach der Höhe des CSB bezahlen."

In der europäischen Patentanmeldung 503 112 wird zur Problemlösung vorgeschlagen, das Etikett mechanisch von dem Rücklaufgut vor der Naßreinigung zu entfernen. Das wird dadurch ermöglicht, daß zwischen das Etikett und die bisherige Klebstoffschicht eine Trennschicht eingefügt wird. Dadurch wird ein Ablösen ohne Zerreißen des Etiketts ermöglicht. Die Klebstoffschicht bleibt jedoch auf den Flaschen und muß durch Waschlauge entfernt werden. Das Problem der rückstandsfreien Ablösung der Etiketten wird daher nicht gelöst.

In der deutschen Offenlegungsschrift 34 34 141 wird der bisherige Klebstoff (Leim) durch einen Montage- oder Fixierklebstoff ersetzt. Dieser soll die Eigenschaft besitzen, nicht auszuhärten. Daher läßt sich ein Etikett, welches mit diesem Klebstoff auf eine Flasche aufgebracht worden ist, jederzeit rückstandsfrei entfernen. Woraus der Klebstoff besteht, wird nicht offenbart. Der Klebstoff wird vollflächig zwischen Flaschenoberfläche und Etikett aufgetragen. Nachteilig ist jedoch, daß die Fixierklebstoffe einen trockenen Untergrund benötigen.

Die Firma Automated Label Systems Company schlägt in ihrem Prospekt "Auto sleeve" mit dem Druckdatum 1993 zur Flaschenetikettierung ein Polyethylen-Banderolenetikett vor, das in geweitetem Zustand über den Behälter gezogen wird und nach dem Zusammenziehen sich fest über den Behälter legt. Dort wird also überhaupt kein Klebstoff verwendet. Das Etikett wird mit einem Hochdruckwasserstrahl - wie mit einem Messer - durchgeschnitten. Angeblich soll dabei der Behälter nicht beschädigt werden. Auf jeden Fall muß aber das Polyethylenetikett entsorgt werden.

Aus dem deutschen Patent 34 42 998 ist ein Verfahren zum Aufbringen eines Umhüllungsetiketts auf einen Behälter bekannt. Bei diesem Verfahren wird zunächst ein begrenzter Bereich des vorderen Teils des Etiketts mit der Behälterwandung verbunden und anschließend nach dem Herumwickeln um den Behälter, ein begrenzter Bereich des das vordere Ende überlappenden hinteren Endes mit diesem verbunden. Als Etikett wird ein thermoplastisches, coextrudiertes Polymer mit einer geschäumten Schicht verwendet. Auf der geschäumten Schicht im begrenzten Bereich des vorderen Etiketts wird mit Hilfe eines Lösemittels durch das Polymer eine viskose, sich verfestigende Lösung gebildet zwecks temporärer, beim Verdampfen des Lösemittels von selbst schwächer werdender Verbindung des begrenzten Bereichs der geschäumten Schicht mit der Behälterwand, wobei das Behältermaterial durch das Lösemittel nicht angegriffen wird. Nachteilig dabei ist, daß für die Aufbringung ein niedrigsiedendes Lösemittel, beispielsweise Methylenchlorid, aromatische oder chlorierte, aliphatische Kohlenwasserstoffe, eingesetzt werden muß.

Das am gleichen Tag beim Deutschen Patentamt eingereichte deutsche Patent 34 42 997 betrifft ein ähnliches Verfahren zum Aufbringen eines Umhüllungsetiketts auf einen Behälter, wobei allerdings hier als Etikett nicht ein thermoplastisches, coextrudiertes Polymer mit einer geschäumten Schicht, sondern ein ebensolches Etikett eingesetzt wird, welches nur aus einem thermoplastischen Polymer besteht. Auch bei diesem Stand der Technik ist es wiederum erforderlich, im Rahmen der Aufbringung des Umhüllungsetiketts wenig umweltverträgliche, schnell verdampfende, chlorhaltige oder aromatische Lösemittel einzusetzen.

Es ist weiterhin bekannt, amorphe Poly-α-olefine als Basis für Schmelzklebstoffe zu verwenden (siehe z.B. EP-A- 0 531 618). Derartige Schmelzklebstoffe zeichnen sich durch eine gute Haftung auf LDPE-Folie sowie eine gute Fixierung auf porösen Substraten aus, so daß sie insbesondere im Hygienebereich (Windeln o.ä.) eingesetzt werden können. Es ist bekannt, daß Harze diesen Basispolymeren zugefügt werden können, wobei gesättigte Harze mit niedriger Polarität die größte Kompatibilität aufweisen. Derartige kompatible Harze wirken im allgemeinen als Tackifier für amorphe Poly-α-olefine. Weiterhin wird dort ausgeführt, daß Wachse wie Polyethylen-, Fischer-Tropsch- oder mikrokristalline Wachse ebenfalls kompatibel mit amorphen Polyolefinen sind und ebenfalls eine Reduzierung der Viskosität, eine Änderung der Topfzeit und eine verminderte Penetration bewirken. Die in dieser Zusammenstellung zusammengetragenen Ausführungsbeispiele von Schmelzklebstoffen zeigen aber, daß das Poly-α-olefin stets als Hauptkomponente, gegebenenfalls zusammen mit einem weiteren Harz und/oder einem weiteren Wachs als Nebenkomponenten eingesetzt werden muß.

Der vorliegenden Erfindung liegt die Aufgabe zugrunde, ein Verfahren zum Verbinden von Rundumetiketten mit Hohlkörpern wie Flaschen, Dosen usw. bereitzustellen, wobei sich die Etiketten vor der Reinigung einfach und möglichst rückstandsfrei von dem Hohlkörper entfernen lassen. Es sollen jedoch weder das Etikettier-Verfahren noch die Handhabung der etikettierten Körper nachteilig beeinflußt werden, insbesondere soll eine Etikettierung auch auf Hochleistungsmaschinen möglich sein.

Diese Aufgabe wird durch das erfindungsgemäße Verfahren gelöst, welches zwei unterschiedliche Schmelzklebstoffe aufweist, nämlich einen zum dauernden Verkleben der Überlappungsstelle des Rundumetiketts und einen zur zeitweiligen Verklebung des Etiketts bei seiner Mitnahme.

Das zu verwendende Klebstoff-System zum Verkleben der Rundumetiketten umfaßt einen Mitnahme-Klebstoff und einen Überlappungs-Klebstoff und ist dadurch gekennzeichnet, daß der Mitnahme-Klebstoff bei seiner Applikationstemperatur eine für die Etikettierung ausreichende Klebkraft aufweist, zweckmäßigerweise 0,005 bis 0,03 N/mm² bei 80 bis 200 °C, und nach seinem Abbinden, insbesondere bei seiner Lagerungstemperatur zwischen 5 °C bis 30 °C praktisch keine Klebkraft besitzt.

Die vorliegende Erfindung betrifft somit ein Verfahren zur Herstellung einer wieder leicht lösbaren Verbindung von Rundumetiketten mit Körpern mittels eines Klebstoff-Systems aus Schmelzklebstoffen, umfassend einen Mitnahme-Klebstoff und einen Überlappungsklebstoff, wobei der Mitnahme-Klebstoff bei seiner Applikationstemperatur eine für die Etikettierung ausreichende Klebkraft und im abgebundenen Zustand auf dem Körper oder dem Etikett praktisch keine Klebkraft aufweist, mit folgender Schrittfolge:
a. Auftragung des Mitnahme-Klebstoffs bei 80 bis 200 °C auf wenigstens einen Teil der Oberfläche des Rundumetiketts oder auf den Behälter,
b. Herumführen des Rundumetiketts und Verbinden der Rückseite des einen Endes mit der Vorderseite des anderen Endes durch den Überlappungs-Klebstoff und
c. Abkühlenlassen des Rundumetiketts.

Die Klebkraft des Mitnahme-Klebstoffes ist bei Raumtemperatur so gering, daß sich das Etikett leicht und vollständig von dem Hohlkörper entfernen läßt, und zwar vorzugsweise ohne Klebstoffreste zu hinterlassen. Bei der Applikation aus der Schmelze reicht die Klebkraft aus, um auch bei hohen Geschwindigkeiten eine exakte Plazierung des Etiketts zu ermöglichen. Durch den vollständigen oder teilweisen Verbleib des Klebstoffes auf dem Etikett kann die aufwendige Flaschenreinigung unter Belastung der Waschlauge mit Etikettenmaterial und Klebstoff vermieden werden, wie sie bisher im Stand der Technik notwendig war. Die Reinigung von Mehrwegflaschen wird also nicht mehr oder nur kaum durch Klebstoffe oder gar durch Etiketten-Reste erschwert.

Ob und wieviel an Mitnahme-Klebstoff auf dem Körper nach dessen Deetikettierung zurückbleibt, hängt stark von dessen Oberflächenbeschaffenheit ab: Wenn die Klebkraft bei Raumtemperatur etwa gleich oder gar größer als die auf der Etikettenoberfläche ist, wird der Klebstoff mehr oder weniger auf dem Körper bleiben, auch wenn seine Klebkraft erfindungsgemäß sehr gering ist. Dann ist der Mitnahme-Klebstoff zweckmäßigerweise auch noch laugenlöslich. Anderenfalls genügt es, wenn der Mitnahme-Klebstoff bei Raumtemperatur praktisch keine Klebkraft hat, auf dem Etikett verbleibt und laugenunlöslich ist.

Nach einer bevorzugten Ausführungsform der vorliegenden Erfindung enthält der nicht-laugenlösliche Mitnahme-Klebstoff im erfindungsgemäßen Klebstoff-System 10 bis 100 Gew.-%, vorzugsweise 30 bis 35 Gew.-% wenigstens eines amorphen Poly-α-olefins, 0 bis 40 Gew.-%, vorzugsweise 5 bis 30 Gew.-% wenigstens eines Weichmachers auf Basis eines aromatischen Dicarbonsäureesters, 0 bis 50 Gew.-%, vorzugsweise 15 bis 40 Gew.-% wenigstens eines natürlichen, chemisch modifizierten oder synthetischen Wachses sowie übliche Hilfs- und Zusatzstoffe.

Unter einem amorphen Poly-α-olefin, das als Komponente im Mitnahme-Klebstoff als Bestandteil des erfindungsgemäßen Verfahrens eingesetzt wird, versteht man ein Homo- oder Co-Polymeres aus mindestens einem der Comonomeren: Ethylen, Propylen und 1-Buten oder 1-Hexen. Üblicherweise werden diese Monomere allein oder gegebenenfalls gemischt bei niedrigem Druck in Gegenwart eines Ziegler-Natta-Katalysators polymerisiert. Vorzugsweise weisen derartige Poly-α-olefine ein Molekulargewicht von etwa 30.000 bis etwa 60.000 g/Mol auf.

Als potentielle Komponente im laugenunlöslichen Mitnahme-Klebstoff des erfindungsgemäßen Verfahrens wird ein Weichmacher auf Basis aromatischer Dicarbonsäureester eingesetzt, also der entsprechende Ester der Phthalsäure, Isophthalsäure oder Terephthalsäure. Der Alkoholrest in diesen als Weichmacher eingesetzten Estern weist üblicherweise 1 bis 8 Kohlenstoffatome auf.

Eine weitere potentielle Komponente im laugenunlöslichen Mitnahme-Klebstoff des erfindungsgemäßen Verfahrens ist wenigstens ein natürliches, chemisch modifiziertes oder synthetisches Wachs. Hierbei können sämtliche Wachse eingesetzt werden, die mit amorphen Poly-α-olefinen kompatibel sind. Als natürliche Wachse können pflanzliche Wachse, tierische Wachse, Mineralwachse oder petrochemische Wachse eingesetzt werden. Als chemisch modifizierte Wachse können Hartwachse wie Montanesterwachse, Sarsolwachse usw. eingesetzt werden. Als synthetische Wachse finden Polyalkylenwachse sowie Polyethylenglykolwachse Verwendung. Aus wirtschaftlichen Gründen werden vorzugsweise petrochemische Wachse wie Petrolatum, Paraffinwachse, Mikrowachse sowie synthetische Wachse, insbesondere Polyethylenwachse mit Schmelzpunkten zwischen 85 und 140 °C und Molekulargewichten im Bereich von 500 bis 3.500, Paraffinwachse mit Schmelzpunkten im Bereich von 45 bis 70 °C und Molekulargewichten zwischen 225 und 500, mikrokristalline Wachse mit Schmelzpunkten im Bereich von 60 bis 95 °C sowie synthetische Fischer-Tropsch-Wachse mit Schmelzpunkten im Bereich von 100 bis 115 °C eingesetzt.

Darüber hinaus können dem laugenunlöslichen Mitnahme-Klebstoff übliche Hilfs- und Zusatzstoffe beigefügt werden. Hier sind zunächst die Stabilisatoren zu nennen. Sie haben die Aufgabe, die reaktionsfähigen Monomere an einer unerwünschten bzw. vorzeitigen Reaktion zu hindern und die Polymere während der Verarbeitung vor Zersetzung zu schützen. Hier sind insbesondere die Antioxidantien zu nennen. Sie werden üblicherweise in Mengen bis zu 3 Gew.-%, vorzugsweise in Mengen von etwa 0,5 Gew.-% dem Mitnahme-Klebstoff beigefügt.

Nach einer bevorzugten Ausführungsform ist der zu verwendende Mitnahme-Klebstoff auch noch in Laugen lösbar, d.h., er verseift und löst sich in einer 1%igen Natronlauge bei 50 °C bis zu einer Konzentration von 10 Gew.-% innerhalb eines Tages rückstandsfrei auf, vorzugsweise innerhalb von 3 Stunden und vor allem innerhalb von 20 Min.. Dann löst sich nämlich der auf dem Körper verbliebene Mitnahme-Klebstoff in der Regel auch bei der Reinigung in einer Reinigungslauge auf. Dabei handelt es sich im allgemeinen um wasserhaltige Medien mit einem pH-Wert auf 8 bis 14.

Unter einem "wasserenthaltenden Medium" im Sinne der vorliegenden Erfindung versteht man eine Lösung, Dispersion oder Emulsion eines alkalisch reagieren organischen oder anorganischen Stoffes, der Wasser enthält, welches geeignet ist, organische Stoffe mit hydrolisierbaren oder salzbildenden Gruppen zu lösen. Beispiele für organische basische Stoffe sind Alkanolamine, insbesondere (Poly)ethanolamine, für anorganische Stoffe, Alkalihydroxide, Alkalicarbonate und Alkalisesquicarbonate, insbesondere aber die entsprechenden Natrium- und Kaliumverbindungen. Dabei sind Natriumhydroxid und Kaliumhydroxid besonders bevorzugt sind, die üblicherweise in Form ihrer wäßrigen Lösungen in Konzentrationen von 0,5 - 40 Gew.-%, eingesetzt werden.

Nach einer bevorzugten Ausführungsform der vorliegenden Erfindung enthält der Mitnahme-Klebstoff
I. 20 bis 98 Gew.-% wenigstens eines laugenlösbaren Polymeren, welches als Rückgrat-Polymer dient,
II. 1 bis 70 Gew.-% wenigstens eines Harzes auf Basis funktioneller Kohlenwasserstoffharze und gegebenenfalls modifizierter Naturharze,
III. 0,5 bis 30 Gew.-% wenigstens eines Weichmachers sowie
IV. 0 bis 3 Gew.-% mindestens eines üblichen Hilfs- und Zusatzstoffes.

Das Rückgrat-Polymer bestimmt im wesentlichen die Kohäsion und das Temperaturverhalten. Es wird vorzugsweise in einer Menge von 30 bis 70 und insbesondere von 50 bis 65 Gew.-% eingesetzt. Dabei handelt es sich um
a) gesättigte und/oder ungesättigte Polyester, vor allem auf der Basis von aromatischen Dicarbonsäuren wie Phthalsäure oder Terephthalsäure, insbesondere um Polyester aus Phthalsäure, Neopentylglykol und Glycerin bzw. Pentaerythrit,
b) Polyacryl- und/oder Polymethacrylsäure-Alkylester mit 1 bis18, insbesondere 1 bis 4 C-Atomen,
c) Acrylsäure-Homo- und/oder -Copolymerisate,
d) Vinyl-Polymere wie z.B. Polyvinylalkohol mit einer Molmasse von über 1 000, Polyvinylpyrrolidon, Vinylpyrrolidon/Vinylacetat-Copolymerisate, Polyvinylether, insbesondere Polyvinylalkylether mit 1 bis 4 C-Atomen in der Alkylgruppe wie z.B. Polyvinylmethylether oder Polyvinylethylether.

Das Harz soll das Rückgrat-Polymer klebrig machen und die Verträglichkeit der Schmelzklebstoff-Komponenten verbessern. Es wird vorzugsweise in einer Menge von 1 bis 15 bzw. 15 bis 70 Gew.-% eingesetzt. Es handelt sich dabei um
a) Hydroabietylalkohol und seine Ester, insbesondere seine Ester mit aromatischen Carbonsäuren wie Terephthalsäure und Phthalsäure,
b) vorzugsweise modifizierte Naturharze wie Harzsäuren aus Balsamharz, Tallharz oder Wurzelharz, z.B. vollverseiftes Balsamharz oder Alkylester von gegebenenfalls teilhydriertem Kolophonium mit niedrigen Erweichungsbereichen wie z.B. Methyl-, Diethylenglykol-, Glycerin- und Pentaerythrit-Ester,
c) Acrylsäure-Copolymerisate, vorzugsweise Styrol-Acrylsäure-Copolymere und
d) ein Harz auf Basis funktioneller Kohlenwasserstoffharze.
Bevorzugt ist es, als klebrigmachendes Harz einen Alkylester von teilhydriertem Kolophonium einzusetzen, wobei die Alkylgruppe vorzugsweise 1 bis 6 C-Atome enthält.

Der Weichmacher ist in dem Schmelzklebstoff vorzugsweise in einer Konzentration von 5 bis 20 Gew.-% enthalten. Brauchbare Weichmacher sind 1- oder mehrwertige Alkohole, vorzugsweise Glykolmonophenylether, Hexamethylenglykol, Glycerin und insbesondere Polyalkylenglykole mit einer Molmasse von 200 bis 6 000. Bevorzugt sind Polyethylenglykole mit einem Molekulargewicht bis etwa 1 000, vorzugsweise bis etwa 600. Auch Polypropylenglykol und Polybutylenglykol sowie Polymethylenglykol sind brauchbar. Zweckmäßigerweise werden Ester als Weichmacher eingesetzt, z.B. flüssige Polyester und Glycerinester wie Glycerindiacetat und Glycerintriacetat sowie Neopentylglykoldibenzoat, Glyceryltribenzoat, Pentaerythritoltetrabenzoat und 1,4-Cyclohexandimethanoldibenzoat. Schließlich können auch Alkylmonoamine und Fettsäuren mit vorzugsweise 8 bis 36 C-Atomen brauchbar sein.

Als übliche Hilfs- und Zusatzstoffe seien Stabilisatoren und Antioxidantien genannt, z.B. Tris(nonylphenyl)-phosphit.

Die obigen Komponenten ergeben den laugenlöslichen Schmelzklebstoff. Er ist in Wasser nicht löslisch, auch wenn einzelne Komponenten löslich sein sollten. Er zeichnet sich daher z.B. durch eine hohe Schwitzwasserbeständigkeit aus.
Die thermische Stabilität des Schmelzklebstoffes ist für einen dauerhaften Einsatz (Mehrschichtenbetrieb) bei Verarbeitungstemperaturen bis zu 160°C für die Praxis ausreichend. Das ist überraschend angesichts der thermischen Instabilität einzelne Rohstoffe, z.B. der von Polyethem und von verseifbaren Polyestern.
Die Viskosität des Schmelzklebstoffes ist mit maximal 1 bis 2 Pas bei 140°C (Brookfield, Thermacell RVT II, ASTM D3236-88) bemerkenswert niedrig angesichts der hohen polaren Kräfte einzelner Rohstoffe. Der Schmelzklebstoff kann daher auf einer Vielzahl von Anlagen eingesetzt werden.
Die Klebeeigenschaften des Schmelzklebstoffes hängen stark von der Zusammensetzung der obengenannten Rohstoffe ab und können daher anhand des Fachwissens leicht an die konkrete Aufgabenstellung angepaßt werden. So können dauerklebrige Schmelzklebstoffe durch eine hohe Konzentration an Weichmacher erhalten werden. Schmelzklebstoffe mit einer ausreichenden Klebrigkeit zum Etikettieren und einer sehr geringen Haftung bei Raumtemperatur können durch eine geringe Konzentration des Weichmachers, insbesondere des Polyols erhalten werden. Derartige Klebstoffe eignen sich als Mitnahme-Klebstoff für die Rundumetiketten, da sich so die Etiketten vor der Reinigung des Hohlkörpers leicht entfernen lassen.
Aufgrund der Variationsmöglichkeiten der Klebeeigenschaften durch Variation der Rezeptur eignet sich der Klebstoff nicht nur als Mitnahme-Klebstoff für Rundumetiketten, sondern darüber hinaus auch zum Verkleben von Papier, Pappe und Kunststoffen sowie im Non-Woven-Bereich.

Als Überlappungs-Klebstoff setzt man einen üblichen Etikettier-Klebstoff mit einer ausreichenden Flexibilität ein. Sie dient dem Ausgleich bei einer Flaschenausdehnung in Folge von Kohlendioxidaustritt bei Flaschen aus thermoplastischem Kunststoff bei erhöhter Temperatur. Der Überlappungs-Klebstoff enthält klebrigmachende Harze als Hauptkomponente, Weichmacher und Polymere als Nebenkomponente sowie übliche Hilfs- und Zusatzstoffe. Dieser Überlappungs-Klebstoff weist gegenüber dem Mitnahme-Klebstoff eine mehr oder weniger gleichbleibende Klebrigkeit über einen weiten Temperaturbereich zwischen -10 und 200 °C auf. Bei der Auftragung dieses Überlappungsklebstoffs ist allerdings darauf zu achten, daß dieser Klebstoff nicht mit dem Behälter, insbesondere der Flasche in Berührung kommt.

Sofern bei den Hohlkörpern, insbesondere Flaschen, eine derartige Flexibilität nicht verlangt wird, kann man als Überlappungsklebstoff auch den vorgenannten Mitnahme-Klebstoff selbst einsetzen.

Bei den zu Etikettierenden Körpern im Sinne der vorliegenden Erfindung handelt es sich insbesondere um Hohlkörper wie Flaschen, Dosen, Fässer, Hülsen oder Kartuschen. Sie bestehen im wesentlichen aus gegebenenfalls plattiertem oder galvanisiertem Metall - beispielsweise Weißblech oder Aluminium -, Glas oder thermoplastischen Kunststoffen wie Polyethylenterephthalat, Polycarbonat, Polyethylen, Polypropylen, Polyvinylchlorid oder Polystyrol. Bevorzugt wird ein polarer Kunststoff, insbesondere ein Polyester. Solche Hohlkörper sind insbesondere für Mineralwasser und Erfrischungsgetränke im Gebrauch.

Die Etiketten bestehen zum einen aus thermoplastischen Kunststoffen wie Polyethylen, Polypropylen, Polystyrol, Polyvinylchlorid oder Zellglas. Bevorzugt ist es, Etiketten aus einer Folie auf der Basis von unpolaren Kunststoffen, insbesondere von orientiertem Polypropylen (OPP) einzusetzen. Dann wird zweckmäßigerweise ein Mitnahme-Klebstoff auf Poly-α-Olefin-Basis verwendet. Weiterhin können die Rundumetiketten aber auch auf Papier basieren, gegebenenfalls in Kombination mit einem Polymeren. Je nach Material und Herstellverfahren kommen beispielsweise folgende Etiketten in Frage: einfache Etiketten aus unveredeltem Papier, Etiketten aus veredeltem Papier, Hochglanzetiketten aus gußgestrichenen Etikettenpapieren, Etiketten aus aluminiumgedampften Papieren und Etiketten aus aluminiumkaschierten Papieren.

An die Form der Etiketten werden keine besonderen Anforderungen gestellt. Allerdings müssen es Rundumetiketten sein.

Die vorliegende Erfindung betrifft weiterhin ein Verfahren zur Verbindung von - gegebenenfalls Schwächungsstreifen enthaltenden - Rundumetiketten mit Körpern, insbesondere Hohlkörpern, mittels eines Klebstoff-Systems der vorgenannten Art mit der Schrittfolge:
a. Übertragen eines Mitnahme-Klebstoffs bei 80 bis 200 °C, vorzugsweise bei 120 bis 180 °C im Falle von nicht-laugenlöslichen Schmelzklebstoffen auf der Basis von Poly-α-Olefinen und 90 bis 160 °C im Falle von laugenlöslichen Schmelzklebstoffen auf der Basis von Estern, auf wenigstens einen Teil der Rückseite eines Rundumetiketts, oder auf die Flasche,
b. Herumführen des Rundumetiketts und Verbindung der Rückseite des einen Endes mit der Vorderseite des anderen Endes durch den Überlappungsklebstoff und
c. Abkühlenlassen des Rundumetiketts.

Zum Ablösen der erfindungsgemäß verklebten Rundumetiketten von Hohlkörpern wird das Rundumetikett nach seiner Durchtrennung - gegebenenfalls an den Schwächungsstellen - durch leichte mechanische Einwirkung vom Hohlkörper getrennt. Dies geschieht bevorzugt in der Weise, daß das Rundumetikett nach seiner Durchtrennung durch leichte mechanische Einwirkung vom Hohlkörper getrennt wird, insbesondere aber, daß die mechanische Einwirkung mittels Druckluft, gegeneinander laufenden Rollen, die das Etikett von der Flasche ziehen, oder Wasserdruck erfolgt. Das erfindungsgemäße Verfahren eignet sich daher insbesondere für recyclebare Hohlkörper im Sinne von Mehrweg-Gebinden und stofflichem Recycling.

Das erfindungsgemäße Verfahren eignet sich auch für Hochleistungsmaschinen mit z.B. 10 Etikettierungen pro Sekunde.

Die vorstehende Erfindung wird nachstehend durch Ausführungsbeispiele näher erläutert.

### A) Schmelzklebstoff auf der Basis von Poly-α-Olefinen

### Herstellbeispiel A1:

27 Gewichtsteile des Weichmachers Phthalsäuredicyclohexylesters, 38,5 Gewichtsteile eines Polyethylenwachses sowie 0,5 Gewichtsteile eines Antioxidans werden bei etwa 150 °C so lange gemischt, bis eine homogene Mischung erhalten worden ist. Daraufhin werden 34 Gewichtsteile eines amorphen Poly-α-olefins mit einem Molekulargewicht von etwa 35.000 g/Mol zu dieser Mischung hinzugegeben.

Von dem vorstehend beschriebenen Mitnahme-Klebstoff wurde auf einer Kofler-Bank ein 100 µm dicker und 1 cm breiter Film aufgebracht, hierauf eine 1 cm breite Etikettenfolie aus orientierten Polypropylen aufgelegt und leicht aufgedrückt. Die verklebte Fläche hatte eine Größe von 1 cm x 1 cm. Die Folie wird mit Hilfe einer Zugprüfmaschine abgezogen. Die hierzu notwendige Kraft kann an der Zugprüfmaschine abgelesen werden. Die Beurteilung der Klebrigkeit und damit der Mitnahmeeigenschaften erfolgte durch Rollen einer Flasche über Etikett mit Klebstoff auf einer derartigen Heizbank, wobei folgende Meßwerte für die Klebkraft erhalten wurden:

| | | | | | | | | | | |
|---|---|---|---|---|---|---|---|---|---|---|
| Temperatur (°C) | 60 | 70 | 80 | 90 | 100 | 110 | 120 | 130 | 140 | 150 |
| Klebkraft (N/mm²) | 0,000 | 0,000 | 0,000 | 0,000 | 0,008 | 0,020 | 0,016 | 0,004 | 0,004 | 0,002 |

### Herstellbeispiel A2:

Ein üblicher Überlappungs-Schmelzklebstoff zum Etikettieren von Dosen, Glas- und Polyethylenterephthalatflaschen wurde beispielsweise nach der Lehre des US-Patents 4749739 hergestellt durch Umsetzen in der Wärme von 50 Gewichtsteilen eines amorphen Poly-α-olefins, 20 Gewichtsteilen eines synthetischen Polycarbonharzes, 20 Gewichtsteilen eines Glycerinesters von teilhydriertem Kolophonium, 10 Teilen eines synthetischen Hartwachses auf Basis eines Polyethylenwachses, welches über das Fischer-Tropsch-Verfahren erhalten worden ist sowie 0,4 Gewichtsteile Antioxidantien.

### Anwendungsbeispiel A1:

Ein Mitnahme-Klebstoff gemäß Beispiel 1 wurde bei 145 °C in einer Menge von 50 g/m² auf die Rückseite von Etiketten, auf einer Contiroll-Etikettiermaschine, Fa. Krones, Neutraubling, aufgebracht und diente dazu, das Etikett mitzunehmen und bis zur Überlappungsverklebung auf der Flasche zu fixieren. Daraufhin wurde auf den Vorderbereich der Rückseite des Etiketts ein Überlappungsklebstoff gemäß Herstellbeispiel 2 aufgetragen, allerdings in der Weise, daß er nicht mit der Flasche direkt in Berührung kommt.

Nachdem die Polyethylenterephthalatflasche einschließlich Umhüllungsetikett die Etikettiermaschine verlassen hat, kommt es nach dem Abkühlen durch die Überlappungsverklebung zu einem stramm auf der Flasche sitzenden Etikett.

Die Deetikettierung selbst erfolgt in der Weise, daß das Etikett an den gegebenenfalls vorhandenen Schwächungsstreifen durchtrennt wird. Hierdurch wird das Etikett nur noch durch den Mitnahme-Klebstoff 1 gehalten, der aber, wie vorstehend unter Beispiel 1 gezeigt, im kalten Zustand, d. h. bei Raumtemperatur, oder 20 °C bis 40 °C, eine nur noch sehr geringe Klebrigkeit besitzt und insofern kann das Etikett bereits bei leichter mechanischer Beanspruchung von der Flasche entfernt werden. Dabei verbleibt der Klebstoff vollständig auf dem Etikett. Das gilt auch, wenn die etikettierte Flasche vor der Deetikettierung unter üblichen Bedingungen (40 °C, Beregnung) gelagert wurde.

### B) Laugenlösbare Schmelzklebstoffe

### Herstellbeispiel B1:

Herstellung eines Mitnahme-Klebstoffs mit einem bei Applikationstemperatur besseren Klebeverhalten als bei Raumtemperatur, der laugenlöslich ist.

Ein Mitnahme-Klebstoff wird durch Mischen von
59,0 Gew.-% des gesättigten aromatischen Polyesters Phthalopal® NP (ein ölfreies Phthalat-Harz, welches von der BASF AG vertrieben wird), auf der Basis von Phthalsäure, Pentaerythrit und Neopentylglykol,
20,0 Gew.-% eines Styrol-Acrylsäure-Copolymers (ACX 12-436),
10,0 Gew.-% eines Kolophoniumalkylesters (Herkolyn® D von der Hercules Inc. vertrieben) hier speziell ein Methylester von teilhydriertem Kolophonium,
10,0 Gew.-% eines Polyethylenglykols mit einer Molekularmasse von 400 (Polydiol 400) sowie
1,0 Gew.-% eines Stabilisators (Irgafos® TNPP vertrieben von Ciba Geigy), auf der Basis von Tris(nonylphenyl)phosphit
unter Erwärmen und Homogenisieren hergestellt.

### Herstellbeispiel 2:

Ein üblicher Überlappungs-Schmelzklebstoff zum Etikettieren von Dosen, Glas- und Polyethylenflaschen wurde beispielsweise nach der Lehre des US-Patents 4749739 hergestellt durch Umsetzen in der Wärme von 50 Gew.-Teilen eines amorphen Poly-α-olefins (vertrieben von der Hüls AG unter der Bezeichnung Vestoplast V3649) 20 Gew.-Teilen eines synthetischen Polyterpenharzes (Wingtack® 95, Goodyear Tire & Rubber Company), 20 Gew.-Teilen eines Glycerinesters von teilhydriertem Kolophonium (Fhoral® 85, Hercules Inc.), 10 Gew.-Tei-len eines synthetischen Hartwachses auf Basis eines Polyethylenwachses, welches über das Fischer-Tropsch-Verfahren erhalten worden ist (Vestowax A 616, Hüls AG) sowie je 0,2 Gew.-Teilen des Anti-oxidants Irganox® 1010 (Ciba-Geigy) sowie des weiteren Antioxidants Irganox® PS 802 (Ciba-Geigy).

### Anwendungsbeispiel B:1

Der Mitnahme-Klebstoff wird bei 120 bis 150 °C auf eine Flasche aus Polycarbonat aufgetragen und besitzt bei dieser Temperatur eine ausreichende Klebrigkeit, um das Rundumetikett, aus Polypropylen, aus dem Etikettenkasten zu entnehmen. Das Etikett wird daraufhin solange auf der Flasche fixiert, bis mit einem Überlappungs-Klebstoff gemäß Beispiel 2, der auf die Rückseite des Etikettenendes aufgetragen wird, das Etikett ausreichend stramm auf der Flasche sitzt.

Für kleine Flaschen mit nur geringer Volumenausdehnung und für Papieretiketten läßt sich auch der Mitnahme-Klebstoff gemäß Beispiel 1 für die Überlappungsklebung, also als Überlappungs-Klebstoff verwenden.

Der Mitnahme-Klebstoff zeichnet sich insbesondere dadurch aus, daß er im kalten Zustand bzw Lagerzustand (Raumtemperatur) nur eine geringe Klebrigkeit besitzt, so daß sich das Etikett nach der Auftrennung - beispielsweise mittels eines Messers - sehr leicht von der Flasche lösen läßt. Ein Materialriß insbesondere bei Papieretiketten tritt hier nicht auf, dies hat gegenüber dem üblichen Verfahren des Standes der Technik den Vorteil, daß das Etikett auf diese Weise vollständig vor der Flaschenwaschanlage entfernt wird. Eine Verunreinigung der Waschlauge mit Papierresten findet daher nicht statt. Nach dem Ablösen der Etiketten mittels leichter mechanischer Beanspruchung verbleibt der Klebstoff größtenteils auf der Flasche, löst sich aber im anschließenden Laugenbad - beispielsweise in einer 1-% Natronlaugelösung bei 80 °C sehr schnell, d.h. innerhalb von 2 bis 10 Minuten und vollständig auf. Der Mitnahme-Klebstoff ist kaum hygroskopisch und fettet selbst durch unbeschichtete Papieretiketten nicht durch.

## Patentansprüche

1. Verfahren zur Herstellung einer wieder leicht lösbaren Verbindung von Rundumetiketten mit Körpern mittels eines Klebstoff-Systems aus Schmelzklebstoffen, umfassend einen Mitnahme-Klebstoff und einen Überlappungsklebstoff, wobei der Mitnahme-Klebstoff bei seiner Applikationstemperatur eine für die Etikettierung ausreichende Klebkraft und im abgebundenen Zustand auf dem Körper oder dem Etikett praktisch keine Klebkraft aufweist, mit folgender Schrittfolge:
a. Auftragung des Mitnahme-Klebstoffs bei 80 bis 200 °C auf wenigstens einen Teil der Oberfläche des Rundumetiketts oder auf den Behälter,
b. Herumführen des Rundumetiketts und Verbinden der Rückseite des einen Endes mit der Vorderseite des anderen Endes durch den Überlappungs-Klebstoff und
c. Abkühlenlassen des Rundumetiketts.

2. Verfahren nach Anspruch 1, gekennzeichnet durch die Klebkraft des Mitnahme-Klebstoffes von 0,005 bis 0,030 N/mm² bei seiner Applikationstemperatur im Bereich von 80 bis 200 °C.

3. Verfahren nach Anspruch 1 oder 2, dadurch gekennzeichnet, daß der Mitnahme-Klebstoff 10 bis 100 Gew.-% wenigstens eines amorphen Poly-α-olefins, 0 bis 40 Gew.-% wenigstens eines Weichmachers auf Basis eines aromatischen Dicarbonsäureesters, 0 bis 50 Gew.-% wenigstens eines natürlichen, chemisch modifizierten oder synthetischen Wachses sowie gegebenenfalls übliche Hilfs- und Zusatzstoffe enthält.

4. Verfahren nach Anspruch 1 oder 2, dadurch gekennzeichnet, daß der Mitnahme-Klebstoff in einer 1%igen Natronlauge innerhalb eines Tages bei 50 °C im wesentlichen rückstandsfrei lösbar ist.

5. Verfahren nach Anspruch 4, dadruch gekennzeichnet, daß der Mitnahme-Klebstoff
I. 20 bis 98 Gew.-% wenigstens laugenlösbaren Rückgrat-Polymeren,
II. 1 bis 70 Gew.-% wenigstens eines Harzes auf Basis funktioneller Kohlenwasserstoffharze und gegebenenfalls modifizierter Naturharze,
III. 0,5 bis 30 Gew.-% wenigstens eines Weichmachers und
IV. 0 bis 3 Gew.-% mindestens eines üblichen Hilfs- und Zusatzstoffes enthält.

6. Verfahren nach mindestens einem der Ansprüche 1 bis 5, dadurch gekennzeichnet, daß der Überlappungs-Klebstoff klebrigmachende Harze als Hauptkomponente, Weichmacher und Polymere als Nebenkomponenten sowie übliche Hilfs- und Zusatzstoffe enthält.

7. Verfahren nach einem der vorangegangenen Ansprüche, dadurch gekennzeichnet, daß das Rundumetikett Schwächungsstreifen enthält.

8. Verfahren zur Ablösung von gemäß Anspruch 1 aufgebrachten Rundumetiketten von Körpern, dadurch gekennzeichnet, daß das Rundumetikett nach seiner Durchtrennung durch leichte mechanische Einwirkung vom Körper getrennt wird.

9. Verfahren nach Anspruch 8, dadurch gekennzeichnet, daß die mechanische Einwirkung mittels Druckluft oder Wasserdruck erfolgt.

10. Verfahren nach mindestens einem der Ansprüche 1 bis 9 zum Etikettieren von Körpern, insbesondere Hohlkörpern, wie Flaschen, Dosen, Fässern, Hülsen oder Kartuschen mit Rundumetiketten.

11. Verfahren nach Anspruch 10, dadurch gekennzeichnet, daß die zu verklebenden Oberflächen der Körper aus gegebenenfalls plattiertem oder galvanisiertem Metall - insbesondere Weißblech oder Aluminium -, Glas, Keramik oder thermoplastischem Kunststoff sind.

12. Verfahren nach Anspruch 11, dadurch gekennzeichnet, daß die thermoplastischen Kunststoffe Polyethylenterephthalat, Polyvinylchlorid, Polypropylen, Polyethylen, Polycarbonat oder Polystyrol sind.

13. Verfahren nach mindestens einem der vorgenannten Ansprüche, dadurch gekennzeichnet, daß die Rundumetiketten auf Papier oder einem thermoplastischen Kunststoff basieren.

14. Verfahren nach Anspruch 13, dadurch gekennzeichnet, daß die Rundumetiketten aus orientiertem Polypropylen sind.

## Claims

1. A process for forming a readily breakable bond between wrap-around labels and containers using an adhesive system of hotmelt adhesives comprising a pickup adhesive and an overlap adhesive, the pickup adhesive having sufficient adhesive strength for labelling at its application temperature, but hardly any adhesive strength after setting on the container or the label, characterized in that it comprises the following steps:
a. applying the pickup adhesive to at least part of the surface of the wrap-around label or to the container at 80 to 200°C,
b. applying the wrap-around label and joining the back of one end to the front of the other end by the overlap adhesive and
c. leaving the wrap-around label to cool.

2. A proces as claimed in claim 1, characterized by an adhesive strength of the pickup adhesive of 0.005 to 0.030 N/mm5 at its application temperature of 80 to 200°C.

3. A process as claimed in claim 1 or 2, characterized in that the pickup adhesive contains 10 to 100% by weight of at least one amorphous poly-α-olefin, 0 to 40% by weight of at least one plasticizer based on an aromatic dicarboxylic acid ester, 0 to 50% by weight of at least one natural, chemically modified or synthetic wax and optionally typical auxiliaries and additives.

4. A process as claimed in claim 1 or 2, characterized in that the pickup adhesive dissolves substantially completely in a 1% sodium hydroxide solution over a period of 1 day at 50°C.

5. A process as claimed in claim 4, characterized in that the pickup adhesive contains
I. 20 to 98% by weight of at least one alkali-soluble backbone polymer,
II. 1 to 70% by weight of at least one resin based on functional hydrocarbon resins and optionally modified natural resins,
III. 0.5 to 30% by weight of at least one plasticizer and
IV. 0 to 3% by weight of at least one typical auxiliary and additive.

6. A process as claimed in at least one of claims 1 to 5, characterized in that the overlap adhesive contains tackifying resins as its principal component, plasticizers and polymers as secondary components and typical auxiliaries and additives.

7. A process as claimed in any of the preceding claims, characterized in that the wrap-around label contains weakening strips.

8. A process for removing wrap-around labels applied in accordance with claim 1 from containers, characterized in that, after it has been cut through, the wrap-around label is separated from the container by light mechanical force.

9. A process as claimed in claim 8, characterized in that the mechanical force is applied in the form of compressed air or water pressure.

10. A process as claimed in at least one of claims 1 to 9 for labeling containers, more particularly hollow containers, such as bottles, cans, drums, tubes or cartridges, with wrap-around labels.

11. A process as claimed in claim 10, characterized in that the surfaces of the containers to be labeled consist of optionally plated or galvanized metal, more particularly tin plate or aluminium, glass, ceramic or thermoplastics.

12. A process as claimed in claim 11, characterized in that the thermoplastics are polyethylene terephthalate, polyvinyl chloride, polypropylene, polyethylene, polycarbonate or polystyrene.

13. A processs as claimed in at least one of the preceding claims, characterized in that the wrap-around labels are based on paper or a thermoplastic.

14. A processs as claimed in claim 13, characterized in that the wrap-around labels consist of oriented polypropylene.

## Revendications

1. Procédé de production d'une liaison à nouveau facilement détachable d'étiquettes enveloppantes, à des solides, à l'aide d'un système d'adhésifs à base de colle à fusion, comprenant une colle d'accrochage et une colle de recouvrement dans lequel la colle d'accrochage ne possède pratiquement aucune force de collage à sa température d'application, suffisante pour l'étiquetage et à l'état détaché sur le solide ou sur l'étiquette, avec la séquence d'étapes suivantes :
a) apposition de la colle d'accrochage de 80 à 120°C sur au moins une partie de la surface de l'étiquette enveloppante ou sur le récipient,
b) amenée tout autour l'étiquette enveloppante et liaison de la face arrière d'une des extrémités à la face antérieure de l'autre extrémité au moyen de la colle de recouvrement et,
c) laisser refroidir l'étiquette enveloppante.

2. Procédé selon la revendication 1,
caractérisé par
la force de collage de la colle d'accrochage qui va de 0,005 à 0,030 N/mm² à sa température d'application dans la plage de 80 à 200°C.

3. Procédé selon la revendication 1 ou 2,
caractérisé en ce que
la colle d'accrochage contient de 10 à 100 % en poids d'au moins une poly-α-oléfine amorphe, de 0 à 40 % en poids d'au moins un agent plastifiant à base d'un ester d'acide dicarboxylique aromatique, de 0 à 50 % en poids d'au moins une cire naturelle, modifiée chimiquement, ou synthétique ainsi qu'éventuellement des adjuvants et des additifs usuels.

4. Procédé selon la revendication 1 ou 2,
caractérisé en ce que
la colle d'accrochage est soluble (essentiellement sans résidu) dans une lessive de soude à 1 % en l'espace d'un jour à 50°C.

5. Procédé selon la revendication 4,
caractérisé en ce que
la colle d'accrochage contient :
1- de 20 à 98 % en poids d'au moins des polymères de squelette solubles dans la lessive,
2- de 1 à 70 % en poids d'au moins une résine à base de résines hydrocarbonées fonctionnelles et le cas échéant une résine naturelle modifiée,
3- de 0,5 à 30 % en poids d'au moins un agent plastifiant ainsi que,
4- de 0 à 3 % en poids d'au moins un adjuvant et un additif usuel.

6. Procédé selon au moins une des revendications 1 à 5,
caractérisé en ce que
la colle de recouvrement renferme des résines qui rendent collant comme constituant principal, des agents plastifiants et des polymères comme composés secondaires ainsi que des adjuvants et des additifs habituels.

7. Procédé selon l'une des revendications précédentes,
caractérisé en ce que
l'étiquette enveloppante contient des bandes d'affaiblissement.

8. Procédé de détachement des étiquettes enveloppantes appliquées conformément à la revendication 1, des solides,
caractérisé en ce que
l'étiquette enveloppante est séparée du solide par action mécanique légère après sa coupure de séparation.

9. Procédé selon la revendication 8,
caractérisé en ce que
l'action mécanique s'effectue à l'aide d'air sous pression ou d'eau sous pression.

10. Procédé selon au moins une des revendications 1 à 9, pour étiqueter des solides, en particulier des corps creux comme des bouteilles, des boîtes, des manchons ou des cartouches avec des étiquettes enveloppantes.

11. Procédé selon la revendication 10,
caractérisé en ce que
les surfaces à encoller du solide sont constituées par du métal, le cas échéant plaqué ou galvanisé, en particulier du fer blanc ou de l'aluminium, ou par du verre, de la céramique ou des matières plastiques thermoplastiques.

12. Procédé selon la revendication 11,
caractérisé en ce que
les matières plastiques thermoplastiques comprennent le téréphtalate de polyéthylène, le chlorure de polyvinyle, le polypropylène, le polyéthylène, le polycarbonate ou le polystyrène.

13. Procédé selon au moins une des revendications précédentes,
caractérisé en ce que
les étiquettes enveloppantes sont à base de papier ou d'une matière plastique thermoplastique.

14. Procédé selon la revendication 13,
caractérisé en ce que
les étiquettes enveloppantes sont en polypropylène orienté.
